Europäisches Patentamt

(19) European Patent Office

Office européen des brevets

(11) **EP 0 856 835 A2**

(12) **EUROPEAN PATENT APPLICATION**

(43) Date of publication:
05.08.1998 Bulletin 1998/32

(51) Int. Cl.⁶: $G10L\ 5/06$

(21) Application number: 98101318.8

(22) Date of filing: 26.01.1998

(84) Designated Contracting States:
AT BE CH DE DK ES FI FR GB GR IE IT LI LU MC
NL PT SE
Designated Extension States:
AL LT LV MK RO SI

(30) Priority: 30.01.1997 JP 16197/97

(71) Applicant: NEC CORPORATION
Tokyo (JP)

(72) Inventor: Hattori, Hiroaki
Minato-ku, Tokyo (JP)

(74) Representative: Betten & Resch
Reichenbachstrasse 19
80469 München (DE)

(54) **Speaker recognition device**

(57)    A speaker recognition device is designed to actualize speaker recognition which is capable of coping with an increase of enrolled speakers with a small amount of processing and to provide a high precision of speaker recognition regardless of a variety of disturbances. Herein, sound analysis is performed on input voice data of an input speaker to produce an input pattern representing sound characteristics. The device stores standard patterns (e.g., time series of sound parameters or HMM parameters) with regard to enrolled speakers in a form of a tree structure which is constructed by nodes mutually connected together from a root to leaves. Similarity calculations are performed in a direction from the root to the leaves of the tree structure to produce similarity scores between the input pattern and the standard patterns respectively. An order is determined for the calculated similarity scores from the highest to the lowest. In addition, a similarity score is calculated for a designated speaker who is specified by speaker information input to the device. If a place of the order set for the designated speaker belongs to a prescribed range of places of the order, the device makes a decision of acceptance that the input speaker coincides with the designated speaker. If not, the device makes a decision of rejection that the input speaker feigns to be the designated speaker.

FIG.1

## Description

BACKGROUND OF THE INVENTION

This invention relates to speaker recognition devices which are capable of performing recognition and verification of speakers using voices. This application is based on patent application No. Hei 9-16197 filed in Japan, the content of which is incorporated herein by reference.

In general, technologies of speaker recognition are designed such that individual information is extracted from voices for recognition of speakers. Those technologies are mainly classified into the speaker collation technique and speaker discrimination technique (or speaker identification technique). Herein, the speaker collation technique performs collation of speakers by making a decision as to whether an unknown speaker coincides with a certain enrolled speaker or not, while the speaker discrimination technique performs discrimination of speakers by detecting who is an unknown speaker within multiple enrolled speakers.

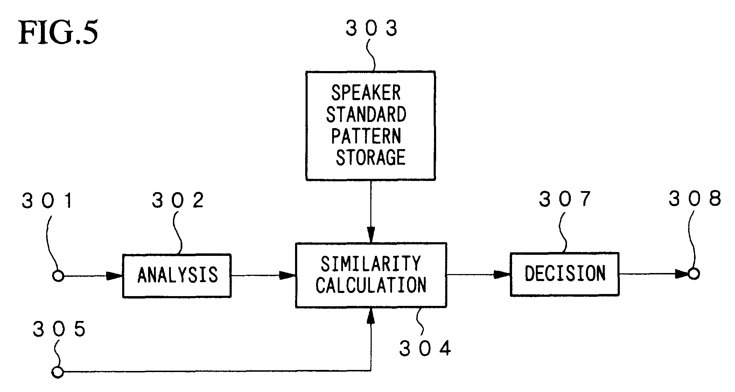

Now, an example of the speaker collation technique is described in conjunction with FIG. 5. Herein, voice of an unknown speaker is input to an input terminal 301. A voice analysis block 302 performs sound analysis of the input voice so as to produce an input pattern which corresponds to time series of sound characteristics parameters. An individual information input terminal 305 inputs individual information for specifying an individual speaker such as a speaker name and a speaker ID. A speaker standard pattern storage block 303 stores standard patterns with respect to enrolled speakers respectively. A similarity calculation block 304 reads a standard pattern of the speaker who is specified by the individual information input to the individual information input terminal 305. Thus, the similarity calculation block 304 calculates a degree of similarity (i.e., similarity score) detected between the input pattern and the standard pattern read from the speaker standard pattern storage block 303. A decision block 307 compares the similarity score with a threshold value which is determined in advance. If the similarity score is greater than the threshold value, the decision block 307 makes a decision of acceptance that the unknown speaker coincides with the speaker specified by the individual information. If not, the decision block 307 makes a decision of rejection that the speaker is an assumed person (or feigned person who feigns the speaker name). Then, a result of the decision is output to an output terminal 308.

The speaker collation technique is disadvantageous that the similarity score detected between the voice of the unknown speaker and the standard pattern of the enrolled speaker is influenced by disturbances such as elapsed variations, surrounding noise and characteristics of transmission lines. For this reason, there is a problem corresponding to a difficulty of the setting of the threshold value for discrimination of the specified individual from the others. So, a variety of methods are proposed for correction of the similarity score. For example, there is provided a method to correct the likelihood by using similarity scores of similar speakers in accordance with cohort normalization. This is disclosed by "paper 1" entitled "The Use Of Cohort Normalized Scores For Speaker Verification" (Proceedings of ICS LP92, pp. 599-602). However, the performance of the above method is not sufficient, so further studies are made to provide or improve the correction method as well as the selection method of similar speakers.

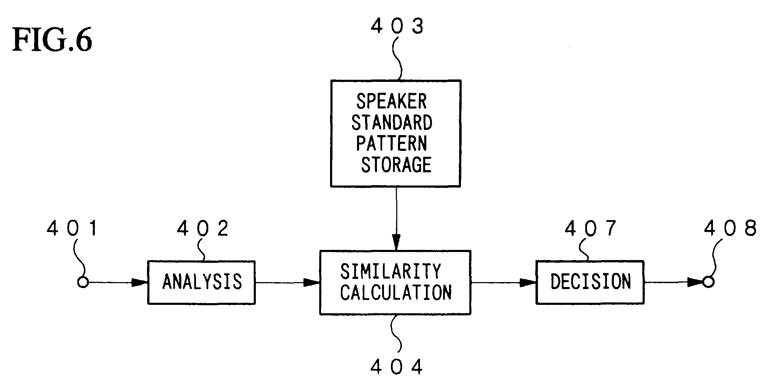

Next, the speaker discrimination technique is described in conjunction with FIG. 6. Voice of an unknown speaker is input to an input terminal 401. A voice analysis block 402 performs sound analysis of the input voice to produce an input pattern representing a time series of parameters. A speaker standard pattern storage block 403 stores standard patterns with respect to enrolled speakers respectively. A similarity calculation block 404 accesses the speaker standard pattern storage block 403 to read the standard patters with respect to all of the enrolled speakers. Thus, the similarity calculation block 404 calculates similarity scores detected between the input pattern and the standard patterns. A decision block 407 discriminates the unknown speaker as one of the enrolled speakers whose similarity score is the highest among the similarity scores calculated by the similarity calculation block 404. Then, a result of discrimination is output to an output terminal 408.

The aforementioned speaker discrimination technique is designed to select a "similar" speaker whose voice is the most similar to the input voice. For this reason, it is not necessary to set a threshold value; and it is not necessary to correct a likelihood. However, if a number of the enrolled speakers is increased, processing time should be correspondingly increased. An increase of the number of the enrolled speakers brings an increase of a ratio of existence of "similar" speakers. So, there is a problem that performance of identification (or performance of discrimination) must be lowered in response to the increase of the number of the enrolled speakers. In addition, it is difficult to use such a speaker identification technique in the case of the large number of enrolled speakers. On the other hand, the conventional technique suffers from another problem in the case of the small number of enrolled speakers, for example, in the case where a single male and a single female are only enrolled as speakers. In that case, an unknown speaker can easily feign to be the enrolled speaker having a same sex thereof.

Problems that the conventional technologies suffer from can be summarized as follows:

In the case of the known speaker collation technique, a similarity score detected between the voice of the unknown speaker and the standard pattern of the certain enrolled speaker is subjected to influence due to a variety of disturbances such as the elapsed variations, surrounding noise and characteristics of transmission lines. So, there is a problem corresponding to a difficulty of setting of a threshold value which is used to discriminate the enrolled speaker from the others. Some methods are proposed to correct the similarity scores. However, the performance of the correction methods is not sufficient until now.

In the case of the speaker discrimination technique, if a number of enrolled speakers is increased, processing time should be increased correspondingly, so there is a problem that performance of identification is lowered because of an increase of a ratio of existence of similar speakers. In addition, it is difficult to use the speaker identification technique in the case of the large number of enrolled speakers. On the other hand, the speaker discrimination technique suffers from another problem in the case of the small number of enrolled speakers, for example, in the case where a single male and a single female are only enrolled as the speakers. In that case, an unknown speaker can easily feign to be the enrolled speaker having a same sex thereof.

As described heretofore, the conventional technology only using either the speaker collation technique or the speaker discrimination technique suffers from the aforementioned problems. So, there is a demand that a brand-new technology is invented to solve the problems.

## SUMMARY OF THE INVENTION

It is an object of the invention to provide a speaker recognition device which is capable of recognizing speakers with high performance of recognition, regardless of a number of enrolled speakers and a variety of disturbances.

A speaker recognition device of this invention is designed based on the speaker collation technique and speaker discrimination technique (or speaker identification technique) for speaker recognition.

Sound analysis is performed on input voice data of an input speaker every prescribed interval of time. Thus, the device produces an input pattern representing sound characteristics of the input voice data. The device stores standard patterns with regard to enrolled speakers in a form of a tree structure which is constructed by nodes mutually connected together from a root to leaves. Herein, the standard patters of the enrolled speakers are allocated to the leaves of the tree structure.

Similarity calculations are performed in a direction from the root to the leaves of the tree structure to produce similarity scores between the input pattern and the standard patterns respectively. Herein, the similarity calculations proceed with lower-level nodes connected to a selected node whose similarity score is relatively high so that similarity scores are calculated for them respectively, whereas the similarity calculations are not performed with regard to lower-level nodes connected to a non-selection node whose similarity score is relatively low. So, a similarity score calculated for the non-selection node is used for the lower-level nodes connected to the non-selection node.

An order is determined for the calculated similarity scores from the highest similarity score to the lowest similarity score. In addition, a similarity score is calculated for a designated speaker who is specified by speaker information input to the device. Then, a place of the order is set for the designated speaker. If the place of the order set for the designated speaker belongs to a prescribed range of places of the order, the device makes a decision of acceptance that the input speaker coincides with the designated speaker. If not, the device makes a decision of rejection that the input speaker feigns to be the designated speaker.

## BRIEF DESCRIPTION OF THE DRAWINGS

These and other objects of the subject invention will become more fully apparent as the following description is read in light of the attached drawings wherein:

FIG. 1 is a block diagram showing a configuration of a speaker recognition device in accordance with a first embodiment of the invention;
FIG. 2 is a block diagram showing a configuration of a speaker recognition device in accordance with a second embodiment of the invention;
FIG. 3 shows an example of a tree structure constructed by nodes storing standard patterns of speakers;
FIG. 4 shows a tree structure for explanation of calculations of similarity scores with respect to selected nodes;
FIG. 5 is a block diagram showing an example of a configuration of a system of the speaker collation technique; and
FIG. 6 is a block diagram showing an example of a configuration of a system of the speaker discrimination technique.

## DESCRIPTION OF THE PREFERRED EMBODIMENT

Before specifically describing the preferred embodiment of the invention, a description will be given with respect to a principle of the invention which employs a tree structure for search and recognition of speakers.

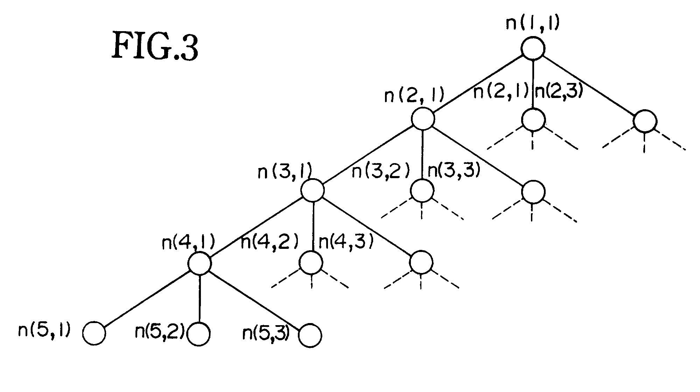

This invention is characterized by that enrolled speakers are classified in response to degrees of sound similarity and are located at positions of leaves of the tree structure. At a speaker recognition mode, a high speed search is performed on the tree structure from a root to the leaves, so that similarity scores are calculated at a high speed with respect to "N" speakers having high similarity scores, wherein "N" is an integer arbitrarily selected. At the same time, a similarity score is calculated with respect to the standard pattern of the speaker who is designated by an unknown speaker. Using the similarity scores, this invention performs the speaker recognition. So, even if a number of enrolled speakers is increased, it is possible to guarantee real-time performance in speaker recognition; and it is possible to actualize a speaker recognition device having a high precision of speaker recognition. FIG. 3 shows an example of the tree structure storing standard patterns of speakers. This tree structure has five layers of nodes each of which has three low-level nodes. In this example of the tree structure, a total number of the speakers is calculated as a mathematical expression of "3 to the power (5-1)", i.e., "81".

In FIG. 3, nodes are arranged in five levels (or five layers) of the tree structure, wherein each node is designated using a numeral "n" with numbers in parenthesis. Nodes (i.e., n(5,1), n(5,2), etc.) corresponding to leaves of the tree structure represent standard patterns of enrolled speakers respectively. Incidentally, the standard patterns for storage depend on the similarity calculation method. In the case of the DP matching, for example, time series of sound parameters corresponding to voices produced by the enrolled speakers are stored as the standard patterns. In the case of the HMM (an abbreviation for "Hidden Markov Model"), HMM parameters which are created by the learning using voices of the enrolled speakers are stored as the standard parameters. The patterns can be made with regard to a fixed amount of voice content corresponding to sentences or words; or the parameters can be made with regard to a certain unit of voice content corresponding to syllables or phonemes which are assembled together to form sentences or words.

Each node of upper level (e.g., n(4,1)) is connected to nodes of lower level (e.g., n(5,1), n(5,2) and n(5,3)). So, the upper-level node has a standard pattern representing sound characteristics of standard patterns of the lower-level nodes. There are provided three methods for creation of the standard pattern for each node, as follows:

i) A first method selects a lower-level node whose sum of similarity scores calculated with regard to other nodes is the smallest among lower-level nodes. So, an upper-level node uses a standard pattern of the selected lower-level node.
ii) A second method creates a standard pattern of an upper-level node by averaging standard patterns of lower-level nodes.
iii) A third method creates a standard pattern for each node on the basis of voice data which are used to create standard patterns for nodes.

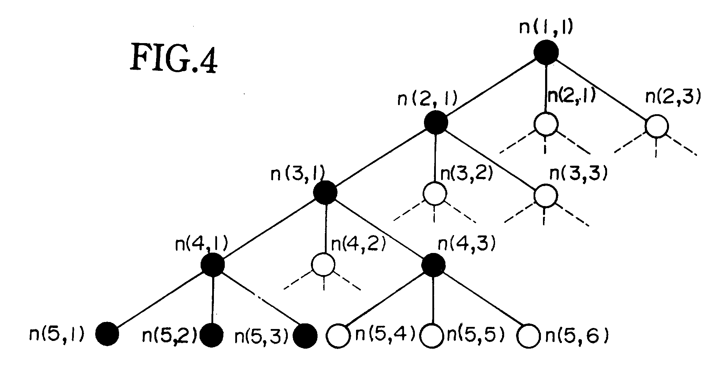

At a speaker collation mode, similarity calculations are made in a direction from a root (i.e., n(1,1)) to leaves so as to produce similarity scores between an input pattern and nodes respectively. At this mode, the similarity calculations are not made with regard to all of the nodes. Herein, the similarity calculations are made with regard to only the selected lower-level nodes connected to nodes whose similarity scores are relatively high. Thus, it is possible to perform the similarity calculations at a high speed. As for the non-calculation node for which a similarity score is not calculated with respect to the input pattern, a similarity score which is calculated for its upper-level node is used. FIG. 4 shows such a manner of calculations. Herein, black circles (●) represent nodes for which similarity scores are calculated, while white circles (○) represent non-calculation nodes for which similarity scores are not calculated. For the non-calculation node (e.g., "n(5,5)" in FIG. 4), a similarity score is provided by the approximation using a similarity score calculated for its upper-level node (e.g., "n(4,3)").

Suppose a tree structure constructed by "N" layers wherein each node has its lower-level nodes whose number is "M". Herein, similarity calculations are made with regard to lower-level nodes connected to top "L" upper-level nodes whose similarity scores are relatively high, so a number of nodes subjected to processing of similarity calculations is represented by a mathematical expression of " M + L × M × (N - 2) ". For example, suppose that 10,000 speakers are allocated to a tree structure constructed by five layers wherein each node has ten lower-level nodes connected thereto. If top three nodes are selected for processing of the similarity calculations, a number of nodes subjected to similarity calculations is calculated as follows:

$$10 + 3 \times 10 \times (5 - 2) = 100$$

This number is 1% of the overall number of speakers (i.e., 10,000). Thus, the above method is capable of calculating the likelihood with regard to all the speakers by processing such a small percentage of the speakers.

Incidentally, it is possible to determine the "L" nodes subjected to similarity calculations in advance. Or, the nodes subjected to similarity calculations are selected from among nodes whose similarity scores are great and are placed in a certain threshold range which is determined in advance.

As the technology for selecting a speaker similar to an input speaker by using a tree structure storing standard patterns of speakers at a high speed, there is provided "paper 2" entitled "Tree-Structure Speaker Clustering for Speaker Adaptation" which is written by Mr. Kosaka and his members for the technical report of the Institute of Electronics, Information and Communication Engineers SP93-110, pp. 49-54 issued on December of 1993. According to the content of the paper 2, the technology provided for the voice recognition is designed to select a most similar speaker whose voice is most similar to the voice of an input speaker from among multiple speakers so that performance of the voice recognition is improved. Using such a method of the technology for the speaker discrimination (or speaker identification), it is possible to actualize a speaker discrimination device (or speaker identification device) whose amount of processing is not increased even if a number of enrolled speakers is increased. However, the above technology does not solve the problem corresponding to reduction of the speaker discrimination rate due to the existence of very similar speakers whose voices are very similar to voices of the enrolled speakers within an increased number of enrolled speakers.

To solve the above problem, it is possible to provide a method as follows:

An unknown speaker enters his or her name, or his or her ID number by using the voice, keyboard and touch panel to designate a certain speaker. Similarity scores are calculated with respect to all the speakers in accordance with the aforementioned method. Then, a place in the order is determined for the similarity score of the designated speaker among the similarity scores calculated for all the speakers. If the place of the order for the designated speaker belongs to a certain range of places of the order, the system of this invention accepts that the unknown speaker coincides with the designated speaker. If not, the system of this invention rejects the unknown speaker as the feigned speaker.

In short, the above method is designed to replace the decision based on the similarity score in the speaker collation with the decision based on the order. However, there is a question as to which is more stable against the disturbances such as the surrounding noise between the decision based on the threshold value and the decision based on the order. It is considered that an influence due to the disturbances may equally appears on each of the speakers. For this reason, it is considered that the decision of acceptance/rejection based on the order of the speaker is more stable against the disturbances rather than the decision of acceptance/rejection based on the similarity score of the speaker. Incidentally, the aforementioned paper 1 describes the technique of normalization of similarity scores using the cohort, wherein this technique is established based on the aforementioned condition that an influence due to the disturbances such as the surrounding noise equally appears on each of the speakers.

The order for the decision of acceptance/rejection can be determined in advance on the basis of a number of enrolled speakers or a ratio of similar speakers whose voices are similar with each other. For example, the order for the decision is determined on the basis of top 1% of the enrolled speakers. Or, speaker identification experiments are made based on "entered" voices of the enrolled speakers so as to set an average place, based on which the order for the decision is determined.

Or, the order for the decision of acceptance/rejection can be determined on the basis of a number of speakers who are extracted from all of the speakers. That is, the extracted speakers correspond to speakers within a certain range of similarity scores including a highest similarity score. So, a number of the extracted speakers is used as a value representing the order for the decision.

The aforementioned problem which occurs in the case of a small number of enrolled speakers can be solved by newly enrolling a certain number of speakers other than the pre-enrolled speakers. The conventional speaker discrimination technique (or speaker identification technique) has a difficulty to handle the above problem by the above method in an aspect of processing. However, this invention requires a relatively small amount of processing with respect to a large number of enrolled speakers. So, it is possible to easily solve the problem by newly enrolling speakers who should be accepted other than the pre-enrolled speakers. In that case, it is not necessary to provide standard patterns individually for the new speakers other than the enrolled speakers. That is, it is possible to use a same standard pattern which corresponds to characteristics of multiple speakers. In the aforementioned case where only a single male and a single female are enrolled as speakers, this invention can cope with the problem by storing a standard pattern exclusively provided for the male and a standard pattern exclusively provided for the female.

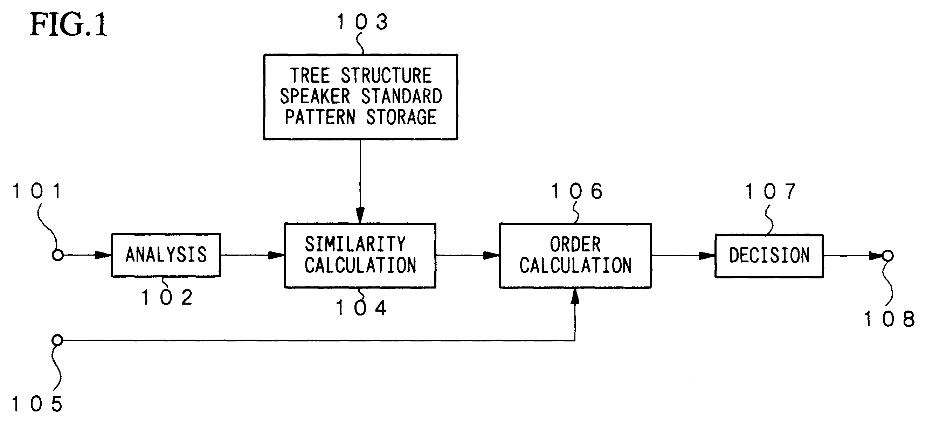

Next, a description will be given with respect to a speaker recognition device in accordance with a first embodiment of the invention in conjunction with FIG. 1.

Voice data of an input speaker are input to an input terminal 101. An analysis block 102 performs sound analysis on the input voice data by every prescribed period of time, e.g., 15 ms. Thus, the analysis block 102 produces characteristics vector series containing voice power representing sound characteristics of the input voice data. As the characteristics vectors, it is possible to use cepstrum which is produced by the FFT analysis (where "FFT" is an abbreviation for "Fast Fourier Transform") or linear prediction analysis, LPC coefficients (where "LPC" is an abbreviation for "Linear Predictive Coding") as well as their time-related variations. For example, the FFT analysis is disclosed by "paper 3" corresponding to a book entitled "Digital Voice Processing" which is written by Dr. Furui and published from the Tokai University of Japan.

A tree structure speaker standard pattern storage block 103 stores standard patterns of multiple speakers in a tree structure form. The tree structure is formed in such a way that one node has a pattern which represents sound characteristics of its lower-lever nodes connected thereto while standard patterns of the speakers are allocated to leaves.

Incidentally, the standard patterns which are stored as leaves of the tree structure do not always correspond to standard patterns of "acceptable" speakers who are subjected to decision of acceptance made by the speaker recognition device of the present embodiment. In other words, as for the standard patterns to be stored as the leaves of the tree structure, it is possible to use standard patterns of speakers other than the acceptable speakers as well as standard patterns having characteristics of multiple speakers.

A similarity calculation block 104 calculates similarity scores between an input pattern and the tree-structured standard patterns of the speakers, wherein similarity calculations are sequentially made with respect to the standard patterns in a direction from a root to the leaves of the tree structure. Herein, the similarity calculations proceed with lower-lever nodes connected to a selected node whose similarity score is relatively high. In other words, the similarity calculations are not performed with regard to lower-lever nodes connected to a node whose similarity score is relatively low. For such non-calculation lower-level nodes, a similarity score calculated for their upper-level node is used. Thus, similarity scores are produced for all nodes, i.e., all speakers. All the similarity scores of the speakers are disposed in order from the highest to the lowest.

A speaker information terminal 105 inputs speaker information such as a name or an ID number which specifies a designated speaker. An order calculation block 106 determines a place of a similarity score, calculated for the designated speaker, in the order of the similarity scores of the speakers which are calculated by the similarity calculation block 104. If the place of the order determined for the designated speaker belongs to a prescribed range of places of the order, a decision block 107 makes a decision that the designated speaker coincides with the input speaker corresponding to the input voice data. If not, the decision block 107 makes a decision that the designated speaker is a feigned speaker. Then, a result of the decision is output to an output terminal 108.

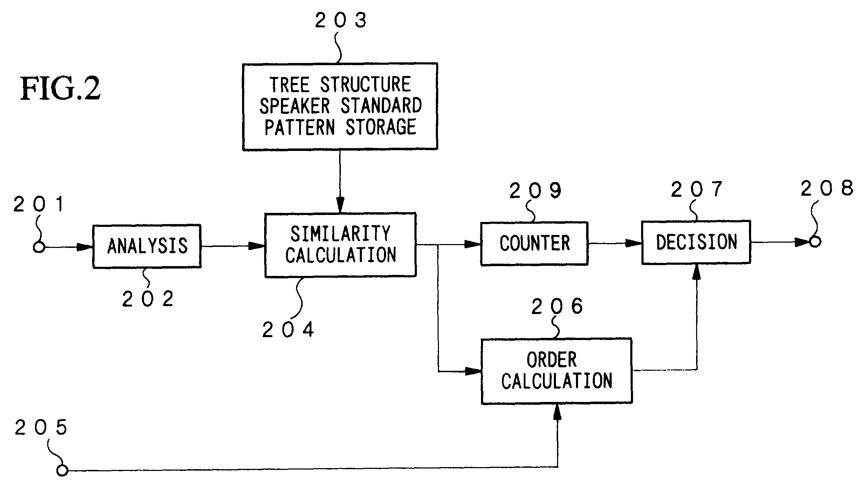

Next, a description will be given with respect to a speaker recognition device in accordance with a second embodiment of the invention in conjunction with FIG. 2. Herein, voice data of an input speaker are input to an input terminal 201. An analysis block 202 performs sound analysis on the input voice data every 15 ms, for example. Thus, the analysis block 202 produces characteristics vector series containing voice power representing sound characteristics. For the characteristics vectors, it is possible to use the cepstrum, which is produced by the FFT analysis of the aforementioned paper 3 and linear prediction analysis, and LPC coefficients as well as their time-related variations.

A tree structure speaker standard pattern storage block 203 stores standard patterns of multiple speakers in a tree structure form. The tree structure is formed in such a way that one node has a pattern which represents sound characteristics of its lower-lever nodes connected thereto while standard patterns of the speakers are allocated to leaves. Herein, the standard patterns which are stored as the leaves of the tree structure do not always correspond to standard patterns of "acceptable" speakers who are subjected to decision of acceptance made by the speaker recognition device of the present embodiment. In other words, as for the standard patterns to be stored as the leaves of the tree structure, it is possible to use standard patterns of speakers other than the acceptable speakers as well as standard patterns having characteristics of multiple speakers.

A similarity calculation block 204 calculates similarity scores between an input pattern and the tree-structured standard patterns of the speakers, wherein similarity calculations are sequentially made with respect to the standard patterns in a direction from a root to the leaves of the tree structure. Herein, the similarity calculations proceed with lower-lever nodes connected to a selected node whose similarity score is relatively high, whereas the similarity calculations are not performed with regard to lower-lever nodes connected to a node whose similarity score is relatively low. For such non-calculation lower-level nodes, a similarity score calculated for their upper-level node is used. Thus, similarity scores are produced for all nodes, i.e., all speakers. All the similarity scores of the speakers are disposed in order from the highest to the lowest.

A speaker information terminal 205 inputs speaker information such as a name or an ID number which specifies a designated speaker. An order calculation block 206 determines a place of a similarity score, calculated for the designated speaker, in the order of the similarity scores of the speakers which are calculated by the similarity calculation block 204. A counter block 209 counts a range of places of the order from the highest similarity score so as to extract certain speakers from all the speakers. If a number of the place of the designated speaker is higher than a number of the extracted speakers, a decision block 207 makes a decision that the designated speaker coincides with the input speaker corresponding to the input voice data. If not, the decision block 207 makes a decision that the designated speaker is a feigned speaker. Then, a result of the decision is output to an output terminal 108.

As this invention may be embodied in several forms without departing from the spirit of essential characteristics thereof, the present embodiments are therefore illustrative and not restrictive.

**Claims**

1. A speaker recognition device comprising:

   input means for inputting voice data of an input speaker;

   voice analysis means for analyzing the input voice data to produce an input pattern representing sound characteristics of the input voice data;

   tree-structured speaker standard pattern storage means for storing standard patterns of a plurality of speakers in a form of a tree structure, wherein each node of the tree structure has a pattern representing sound characteristics of lower-level nodes connected thereto, so that standard patterns of the plurality of speakers are allocated to leaves of the tree structure respectively;

similarity calculation means for performing similarity calculations in a direction from a root to the leaves of the tree structure so as to produce similarity scores between the input pattern and the standard patterns of the tree structure respectively with regard to all of the plurality of speakers, wherein the similarity calculations are performed with regard to lower-level nodes connected to each of selected nodes whose similarity scores are relatively high while a similarity score calculated for a upper-level node which is relatively low is used for lower-level nodes connected to the upper-level node whose similarity score is relatively low;

speaker information input means for inputting speaker information such as a name or an ID number which specifies a designated speaker;

order calculation means for determining an order for the similarity scores calculated by the similarity calculation means from the highest similarity score to the lowest similarity score, wherein the order calculation means setting a place of the order for a similarity score of the designated speaker; and

decision means for making a decision that the designated speaker coincides with the input speaker if the place of the order setting for the designated speaker belongs to a prescribed range of places of the order.

2. A speaker recognition device as defined in claim 1 further comprising counter means for counting a number of speakers who belong to a prescribed range of similarity scores from the highest similarity score within the similarity scores calculated for all of the speakers, so that the decision means makes a decision that the designated speaker coincides with the input speaker if a value of the place of the order set for the designated speaker is greater than the number of speakers counted by the counter means.

3. A speaker recognition device as defined in claim 1 wherein the tree-structured speaker standard pattern storage means stores the standard patterns which do not only correspond to enrolled speakers but also correspond to speakers other than the enrolled speakers.

4. A speaker recognition device comprising:

analysis means for performing sound analysis on an input pattern corresponding to input voice data of an input speaker every prescribed period of time;

storage means for storing standard patterns of enrolled speakers in a form of a tree structure;

similarity calculation means for performing similarity calculations to produce similarity scores between the input pattern and the standard patterns respectively, wherein similarity calculations proceed with lower-level nodes connected to a selected node whose similarity score is relatively high so that similarity scores are respectively calculated for the lower-level nodes connected to the selected node while the similarity calculations are not performed with regard to lower-level nodes connected to a non-selection node whose similarity score is relatively low so that a similarity score calculated for the non-selection node is used for the lower-level nodes connected to the non-selection node;

means to provide speaker information specifying a designated speaker;

order calculation means for determining an order for the similarity scores calculated for all the enrolled speakers from the highest similarity score to the lowest similarity score and for setting a place of the order for a similarity score of the designated speaker; and

decision means for making a decision of acceptance that the designated speaker coincides with the input speaker if the place of the order set for the designated speaker belongs to a prescribed range of places of the order, the decision means making a decision of rejection that the designated speaker does not coincide with the input speaker.

5. A speaker recognition device as defined in claim 4 wherein the designated speaker is selected from among the enrolled speakers.

6. A speaker recognition device as defined in claim 4 wherein the storage means stores the standard patterns of the enrolled speakers as well as standard patterns of other speakers other than the enrolled speakers, so that the designated speaker is selected from among the enrolled speakers as well as the other speakers.

7. A speaker recognition device as defined in claim 4 wherein the standard patterns correspond to time series of sound parameters or HMM parameters.

# FIG.1

EP 0 856 835 A2

FIG.2

EP 0 856 835 A2

FIG.3

EP 0 856 835 A2

FIG.4

n(1,1)

n(2,1)  n(2,1)  n(2,3)

n(3,1)  n(3,2)  n(3,3)

n(4,1)  n(4,2)  n(4,3)

n(5,1)  n(5,2)  n(5,3)  n(5,4)  n(5,5)  n(5,6)

EP 0 856 835 A2

# FIG.5

FIG.6

EP 0 856 835 A2